# EUROPÄISCHE PATENTSCHRIFT

(11) **EP 2 808 643 B1**
(45) Veröffentlichungstag und Bekanntmachung des Hinweises auf die Patenterteilung: **10.01.2018**
(21) Anmeldenummer: 14001754.2
(22) Anmeldetag: 19.05.2014
(51) Int. Cl.: G01B 7/28, G01N 27/90

(54) **Rohrgeometrieermittlungsverfahren**
Method for measuring geometry of tubular components
Procédé de mesure de la géométrie de composants tubulaires

(30) Priorität: 01.06.2013 DE 102013009245
(43) Veröffentlichungstag der Anmeldung: 03.12.2014
(73) Patentinhaber: Westinghouse Electric Germany GmbH, 68167 Mannheim (DE)
(72) Erfinder: Kraus, Werner, 68307 Mannheim (DE); Goor, Bruno, 76684 Östringen (DE)
(74) Vertreter: Eickmeyer, Dietmar

(56) Entgegenhaltungen:
- DE-A1-102007 004 223
- GB-A- 2 462 193
- US-B2- 6 931 748

## Beschreibung

Die Erfindung betrifft ein Rohrgeometrieermittlungsverfahren unter Verwendung eines Matrixsensors, über dessen rundlichen Umfang eine Vielzahl von Wirbelstromsensorpaaren angeordnet ist.

Es ist allgemein bekannt, dass in nuklearen Energieerzeugungsanlagen ein Höchstmaß an Sicherheit gefordert ist, um jegliches Risiko für die Umwelt und das Bedienpersonal auszuschließen. Hierzu gehört auch eine Kontrolle von Rohrleitungssystem, insbesondere solcher, welche für den Durchfluss von radioaktiv belasteten Gasen oder Flüssigkeiten vorgesehen sind. Hierbei ist die Überprüfung der Konstanz des Innendurchmessers von Rohrleitungen und der Beschaffung der Innenwandung von wesentlicher Bedeutung. Zur optischen Kontrolle ist eine grafische Darstellung der Messergebnisse wünschenswert.

Bislang bekannte Messverfahren basieren auf einer Wirbelstrommessung. An einem Matrixsensor sind längs einer Kreisbahn mehrere Wirbelstromsensorpaare angebracht, wobei der Radius der Kreisbahn derart bemessen ist, dass der Matrixsensor in ein zu prüfendes Rohr gegebenen ähnlichen Durchmessers einführbar ist. Ein jeweiliges Wirbelstromsensorpaar weist eine Erregerspule und eine Detektionsspule auf, was dem Fachmann jedoch bekannt ist. Die Darstellung der damit ermittelten Rohdaten der Wirbelstromprüfung beschränkt sich auf eine Darstellung der Messergebnisse über der Abwicklung des Rohrumfangs in einem gegebenen Bereich entlang der Längsachse. Um eine geglättete Darstellung zu erzielen, werden konventionelle Filtertechniken wie Bandpass-und Tiefpassfilter eingesetzt.

Die Wirbelstromsensorpaare sind jedoch auf einen festen Abstand zur Rohrwandung kalibriert. Im Fall von Geometrieänderungen des geprüften Rohrs, insbesondere bei einer Deformation wie einer Einschnürung, können die bekannten Verfahren daher keine realistische Ermittlung beziehungsweise Darstellung der Rohrgeometrie ermöglichen. Der in das Rohr eingeführte molchähnliche Matrixsensor verschiebt nämlich bei Deformationen der Rohrgeometrie seine Lage, da er sich an der Innenwandung des Rohres abstützt. Hierdurch verschiebt sich die Sensorachse, welche in einem solchen Fall nicht mehr mit der eigentlichen Rohrachse übereinstimmt. Der Matrixsensor ist dann nicht mehr genau zentrisch im Rohr und der Abstand der jeweiligen Wirbelstromsensoren zur Rohrinnenwandung verschiebt sich entsprechend.

Der dadurch veränderte Verlauf der Rohdatenamplituden der Wirbelstromsensorpaare über den Umfang und die Längsachse stellt dann keine geeignete Größe mehr für die Ermittlung beziehungsweise Darstellung der Rohrgeometrie dar. Die bisherigen Ansätze verwenden frequenzbasierte Filtermechanismen, um eine geglättete Darstellung der Oberfläche zu erzielen, wodurch eine realistische Ermittlung beziehungsweise Darstellung der Geometrie jedoch nicht erreichbar ist.

*Im Patentdokument* GB 2462193 A *ist ein Testsystem für Rohre in der Ölindustrie offenbart, welches auf dem Prinzip der Wirbelstrommessung basiert. Anhand der Messergebnisse und entsprechender Kalibrierkurven werden verschiedene Fehlertypen einer Ölleitung erkannt und klassifiziert.*

*Im Patentdokument* DE 10 2007 004 223 A1 *ist ein ähnliches System offenbart, zu welchem parallel arbeitend weitere auf anderen Messprinzipien basierende Systeme vorgesehen sind.*

Ausgehend von diesem Stand der Technik ist es Aufgabe der Erfindung, ein Rohrgeometrieermittlungsverfahren anzugeben, welches anhand ermittelter Rohdaten einer Wirbelstrommessung eine besonders realistische geometrische Darstellung des vermessenen Rohrinnenraumes ermöglicht.

Diese Aufgabe wird gelöst durch ein Rohrgeometrieermittlungsverfahren der eingangs genannten Art. Dieses ist durch folgende Schritte gekennzeichnet:
- Bereitstellung eines metallischen rohrähnlichen Justierkörpers definierter Geometrie mit wenigstens einer definierten Deformation längs des inneren Umfangs,
- Vermessung der Innenfläche des Justierkörpers mittels des zentrisch in dessen Innenraum eingeführten Matrixsensors, wobei die elektrische Phasenlage der jeweiligen Wirbelstromsensorpaare unter Berücksichtigung der bekannten Geometrie des Justierkörpers angepasst wird,

- Erstellung einer die jeweilige Messsignalamplitude und den zugehörigen realen radialen Abstand des jeweiligen Wirbelstromsensorpaares zur Innenwandung berücksichtigende Kalibrierkurvenschar mit je einer Kalibrierkurve für jedes Wirbelstromsensorpaar,
- Vermessung eines zu prüfenden Rohres mittels des zentrisch in dessen Innenraum eingeführten Matrixsensors an wenigstens einem Messpunkt und Erstellung eines Rohdatensatzes der gewonnenen Vermessungsdaten, welcher für jedes Wirbelstromsensorpaar je Messpunkt eine zugehörige Messsignalamplitude umfasst,
- Umrechnung der Messsignalamplituden des Rohdatensatzes in geometrische radiale Abstände zur Innenwandung unter Verwendung der Kalibrierkurvenschar, wobei anhand der während der Prüfung des Rohres auftretenden Signalamplituden für jedes Sensorpaar je Messpunkt ein entsprechend vorkalibrierter Wert aus der Kalibrierkurvenschar verwendet wird,
- Bereitstellung eines geometrischen Datensatzes unter Verwendung der ermittelten radialen Abstände zur visuellen Darstellung der Innenfläche des zu prüfenden Rohres.

Im Rahmen dieses Verfahrens werden die Daten eines Matrixsensors zur Ermittlung der Rohrgeometrie und damit zur qualitativen und quantitativen Bestimmung lokaler-Geometrieänderungen, wie z. B. Einschnürungen und Beulen, herangezogen. Durch die relativ dichte Anordnung von Wirbelstromsensorpaaren über den Umfang des Matrixsensors sind somit entsprechend hohe Auflösungen der Rohrgeometrie über den Umfang möglich. Zur quantitativen Bestimmung der Durchmesser-/ Radius-Änderungen wird eine geeignete Justierung des Systems benötigt. Hierzu wird vor Beginn der Aufzeichnung der Rohrdaten ein speziell konzipierter Justierkörper mit dem Matrixsensor vermessen. Basierend auf den Messdaten des Justierkörpers mit Referenzeinschnürungen wird mittels einer Profilometriesoftware die Phasenlage der Sensorspulenpaarungen eingestellt sowie eine Kalibrierkurvenschar mit einer Kalibrierkurve je Sensorspulenpaarung mit den Istmaßen der Einschnürungen des Justierkörpers erstellt.

Die Grundidee der Erfindung besteht darin, die Signalamplituden der Wirbelstromsensorpaare als Ausgangsbasis für den zu ermittelnden Abstand zu wählen. Je nach während der Prüfung des Rohres auftretenden Signalamplituden wird für jedes Sensorpaar je Messpunkt anhand der zuvor ermittelten Kalibrierkurvenschar ein zugehöriger Abstand ermittelt. Somit wird der Tatsache, dass bei einer Verschiebung der Sensorachse oder dem Auftreten einer Deformation ein anderer Kalibrierwert für ein jeweiliges Wirbelstromsensorpaar nötig ist, dahingehend Rechnung getragen, dass ein entsprechend vorkalibrierter Wert aus der Kalibrierkurvenschar verwendet wird.

Eine Kalibrierkurve stellt somit letztendlich eine Zuordnung zwischen Signalamplitude und Abstand dar. Das zuvor am Justierkörper erfolgte Aufnehmen der Kalibrierkurven sollte das gesamte Spektrum an Deformationstiefen abdecken, welche im Rahmen einer Rohrprüfung zu erwarten sind. Ebenso ist auch darauf zu achten, dass der Justierkörper in seiner Materialbeschaffenheit, seinem Durchmesser und seiner Wandungsdicke dem zu prüfenden Rohr entspricht. Nur so können die ermittelten Kalibrierkurven auf die erfindungsgemäße Rohrprüfung angewendet werden. Idealerweise wird daher als Justierkörper eine Scheibe des original zu prüfenden Rohrtyps verwendet.

Somit ist es in vorteilhafter Weise ermöglicht, auch bei Deformationen des Rohrinneren oder einer Verschiebung der Sensorachse, also bei einer Abweichung des radialen Sollabstandes zu einem radialen Istabstand, den korrekten radialen Abstand eines Wirbelstromsensorpaares zur Innenwandung des zu prüfenden Rohres zu ermitteln.

Entsprechend einer bevorzugten Ausgestaltungsvariante des erfindungsgemäßen Rohrgeometrieermittlungsverfahrens weist der Justierkörper drei Einschnürungen im Bereich von etwa 0,8%, 1,6% und 2,4% des Rohrinnendurchmessers auf. Die Tiefe der Deformationen beziehungsweise Einschnürungen des Justierkörpers liegt somit im Erwartungsbereich real zu prüfender Rohre. Durch eine homogene Verteilung der verschiedenen Einschnürtiefen ist eine gute Messbarkeit über den ganzen Erwartungsbereich gegeben.

Gemäß einer weiteren Variante des erfindungsgemäßen Rohrgeometrieermittlungsverfahrens wird der Matrixsensor innerhalb des zu prüfenden Rohres an mehrere längs einer Sensorachse befindliche Messpunkte verschoben und an jedem Messpunkt wird jeweils eine Messung durchgeführt. Somit wird die Rohrgeometrie längs der Rohrinnenachse beziehungsweise längs der Sensorachse erfasst.

Durch einen entsprechenden Vergleich von Messwerten an axial benachbarten Messpunkten lassen sich in vorteilhafter Weise auch Rückschlüsse über eine eventuelle Verschiebung der Sensorachse ziehen.

Im besonders interessierenden Fall lokaler Einschnürungen wird die in diesen Bereichen stattfinde Verschiebung der Sensorachse relativ zur Rohrachse erfindungsgemäß beispielsweise derart berücksichtigt, dass die Messwerte entsprechend der Verschiebung in Längsachsenrichtung korrigiert werden, bevor sie als Daten in den geometrischen Datensatz einfließen.

So ist eine weitere erfindungsgemäße Variante des Rohrgeometrieermittlungsverfahrens dadurch gekennzeichnet, dass im Fall einer lokalen Deformation eine Verschiebung der Sensorachse relativ zur Rohrachse bei der Erstellung des geometrischen Datensatzes anhand von längs der Sensorachse auftretenden Änderungen ausgeglichen wird. Änderungen der Messwerte, welche sich längs der Sensorachse ergeben, können durch Vergleich untereinander somit entweder als tatsächliche Änderung der Rohrgeometrie identifiziert werden oder aber zur rechnerischen Korrektur einer verschobenen Sensorachse verwendet werden. Dies ist unter Verwendung der vorhandenen Kalibrierkurvenschar ohne weiteres möglich.

Gemäß einer weiteren Variante des Verfahrens wird eine Abweichung der Positionierung des Matrixsensors von der idealen zentrischen Lage rechnerisch kompensiert, indem eine gegenläufige radiale Abstandsänderung gegenüberliegender Wirbelstromsensorpaare an benachbarten Messpunkten bei der Erstellung des geometrischen Datensatzes ausgeglichen wird. Wenn beispielsweise ein erstes Wirbelstromsensorpaar zwischen zwei benachbarten Messpunkten eine Abstandsänderung von +Δx ermittelt und das gegenüberliegende, um 180° versetzte Paar, eine Abstandsänderung von -Δx, so bleibt der ermittelte Rohrdurchmesser zwischen den Messpunkten gleich und es kann auf eine Drift der Sensorachse geschlossen werden, welche rechnerisch unter Verwendung der Kalibrierkurvenschar im Nachhinein korrigierbar ist.

In einer besonders bevorzugten Variante des Rohrgeometrieermittlungsverfahrens wird der bereitgestellte geometrische Datensatz in Form einer grafischen Darstellung auf einer Anzeigevorrichtung visualisiert. Dies kann beispielsweise ein handelsüblicher PC sein. Durch - bedarfsweise auch wiederholte - entsprechende Anwendung der zuvor beschriebenen Korrekturalgorithmen auf den Rohdatensatz ist eine sehr realitätsnahe Darstellung der Rohrgeometrie erreicht, wodurch eventuelle Deformationen durch den Benutzer einfach und sicher erkennbar sind. In einer besonders bevorzugten Form kommt auch eine dreidimensionale Darstellung zum Einsatz.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen
- Fig. 1: einen exemplarischen Justierkörper mit Matrixsensor sowie
- Fig. 2: ein exemplarisches zu prüfendes Rohr mit Matrixsensor.

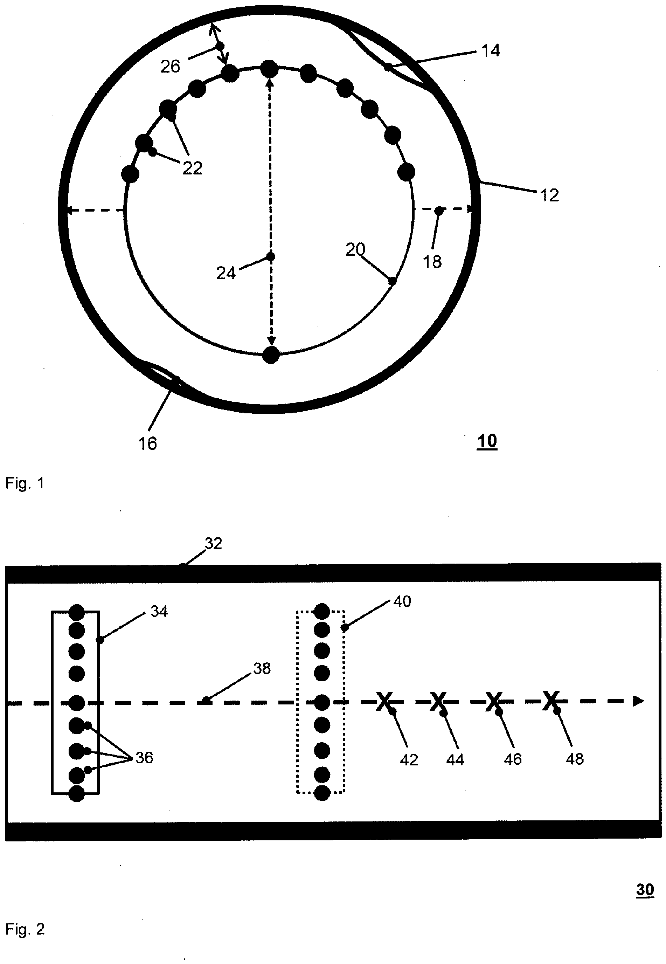

Fig. 1 zeigt einen exemplarischen Justierkörper mit Matrixsensor in einer schematischen Darstellung 10. Ein metallischer rohrscheibenähnlicher Justierkörper 12 weist an seiner Innenseite zwei definierte Deformationen 14, 16 auf, deren Geometrie neben dem Innendurchmesser 18 genau bekannt ist. Ein scheibenähnlicher Matrixsensor 20 ist zu Kalibrierzwecken zentrisch in den Justierkörper 12 eingeführt. Der Matrixsensor 20 weist längs seines Umfangs in äquidistanten Abständen eine Mehrzahl von Wirbelstromsensorpaaren 22 auf. Aufgrund der zentrischen Anordnung des Matrixsensors ist der radiale Abstand 26 der Wirbelstromsensorpaare im deformationsfreien Bereich jeweils gleich.

Mit der Bezugsziffer 24 gekennzeichnet ist ein gegenüberliegendes Wirbelstromsensorpaar. Bei einer nicht zentrischen Positionierung des Matrixsensors kann diese beispielsweise daran erkannt werden, dass beide Wirbelstromsensorpaare 24 einen gegenläufigen radialen Versatz des Abstandes zur Rohrinnenwandung detektieren.

Figur 2 zeigt ein exemplarisches zu prüfendes Rohr mit Matrixsensor in einer Schnittansicht 30. In einem zu prüfenden Rohr 32 ist an einem ersten Messpunkt ein scheibenähnlicher Matrixsensor 34 befindlich, welcher in gestrichelter Form und mit der Bezugsziffer 40 auch an einem zweiten Messpunkt dargestellt ist. Diese beiden Messpunkte liegen zusammen mit vier weiteren Messpunkten 42, 44, 46, 48 längs einer Sensorachse 38, welche in diesem Beispiel aufgrund nicht vorhandener Deformationen auch der Rohrachse entspricht. Der Matrixsensor 34 ist molchähnlich längs der Sensorachse im Rohrinneren beweglich und stützt sich mit geeigneten Stützmitteln an der Rohrinnenwandung ab. Um den Umfang des Matrixsensors herum sind in äquidistanten Abständen Wirbelstromsensorpaare 36 vorgesehen, welche der Ermittlung des jeweiligen radialen Abstandes zum Rohrinneren dienen.

### Bezugszeichenliste

- 10: exemplarischer Justierkörper mit Matrixsensor
- 12: rohrähnlicher Justierkörper
- 14: erste Deformation
- 16: zweite Deformation
- 18: Innendurchmesser von rohrähnlichem Justierkörper
- 20: exemplarischer Matrixsensor
- 22: Wirbelstromsensorpaare
- 24: gegenüberliegendes Wirbelstromsensorpaar
- 26: radialer Abstand
- 30: exemplarisches zu prüfendes Rohr mit Matrixsensor
- 32: exemplarisches zu prüfendes Rohr
- 34: exemplarischer Matrixsensor an erstem Messpunkt
- 36: Wirbelstromsensorpaare
- 38: Sensorachse
- 40: exemplarischer Matrixsensor an zweitem Messpunkt
- 42: dritter Messpunkt
- 44: vierter Messpunkt
- 46: fünfter Messpunkt
- 48: sechster Messpunkt

## Patentansprüche

1. Rohrgeometrieermittlungsverfahren unter Verwendung eines Matrixsensors (20, 34, 40), über dessen rundlichen Umfang eine Vielzahl von Wirbelstromsensorpaaren (22, 36) angeordnet ist, umfassend folgende Schritte:
• Bereitstellung eines metallischen rohrähnlichen Justierkörpers (12) definierter Geometrie mit wenigstens einer definierten Deformation (14, 16) längs des inneren Umfangs,
• Vermessung der Innenfläche des Justierkörpers (12) mittels des zentrisch in dessen Innenraum eingeführten Matrixsensors (20, 34, 40), wobei die elektrische Phasenlage der jeweiligen Wirbelstromsensorpaare (22, 36) unter Berücksichtigung der bekannten Geometrie des Justierkörpers (12) angepasst wird,
• Erstellung einer die jeweilige Messsignalamplitude und den zugehörigen realen radialen Abstand (26) des jeweiligen Wirbelstromsensorpaares (22, 36) zur Innenwandung berücksichtigende Kalibrierkurvenschar mit je einer Kalibrierkurve für jedes Wirbelstromsensorpaar (22, 36),
• Vermessung eines zu prüfenden Rohres (32) mittels des zentrisch in dessen Innenraum eingeführten Matrixsensors (20, 34, 40) an wenigstens einem Messpunkt (42, 44, 46, 48) und Erstellung eines Rohdatensatzes der gewonnenen Vermessungsdaten, welcher für jedes Wirbelstromsensorpaar (22, 36) je Messpunkt (42, 44, 46, 48) eine zugehörige Messsignalamplitude umfasst,
• Umrechnung der Messsignalamplituden des Rohdatensatzes in geometrische radiale Abstände (26) zur Innenwandung unter Verwendung der Kalibrierkurvenschar, *wobei anhand der während der Prüfung des Rohres auftretenden Signalamplituden für jedes Sensorpaar je Messpunkt ein entsprechend vorkalibrierter Wert aus der Kalibrierkurvenschar verwendet wird,*
• Bereitstellung eines geometrischen Datensatzes unter Verwendung der ermittelten radialen Abstände zur visuellen Darstellung der Innenfläche des zu prüfenden Rohres (32).

2. Rohrgeometrieermittlungsverfahren nach Anspruch 1, **dadurch gekennzeichnet, dass** der Justierkörper (12) drei Einschnürungen im Bereich von etwa 0,8%, 1,6% und 2,4% des Rohrinnendurchmessers aufweist.

3. Rohrgeometrieermittlungsverfahren nach Anspruch 1 oder 2, **dadurch gekennzeichnet, dass** der Matrixsensor (20, 34, 40) innerhalb des zu prüfenden Rohres (32) an mehrere längs einer Sensorachse (38) befindliche Messpunkte (42, 44, 46, 48) verschoben wird und an jedem Messpunkt (42, 44, 46, 48) jeweils eine Messung durchgeführt wird.

4. Rohrgeometrieermittlungsverfahren nach Anspruch 3, **dadurch gekennzeichnet, dass** im Fall einer lokalen Deformation (14, 16) eine Verschiebung der Sensorachse (38) relativ zur Rohrachse bei der Erstellung des geometrischen Datensatzes anhand von längs der Sensorachse (38) auftretenden Änderungen ausgeglichen wird.

5. Rohrgeometrieermittlungsverfahren nach Anspruch 3 oder 4, **dadurch gekennzeichnet, dass** eine Abweichung der Positionierung des Matrixsensors (20, 34, 40) von der idealen zentrischen Lage kompensiert wird, indem gegenläufige radiale Abstandsänderung gegenüberliegender Wirbelstromsensorpaare (24) bei benachbarten Messpunkten (42, 44, 46, 48) bei der Erstellung des geometrischen Datensatzes ausgeglichen werden.

6. Rohrgeometrieermittlungsverfahren nach einem der vorherigen Ansprüche, **dadurch gekennzeichnet, dass** der bereitgestellte geometrische Datensatz in Form einer grafischen Darstellung auf einer Anzeigevorrichtung visualisiert wird.

7. Rohrgeometrieermittlungsverfahren nach Anspruch 6, **dadurch gekennzeichnet, dass** die Darstellung dreidimensional ist.

## Claims

1. Method for determining the geometry of tubular components by using a matrix sensor (20, 34, 40), over the circular circumference of which a multiplicity of eddy current sensor pairs (22, 36) are arranged, comprising the following steps:
• providing a metallic pipe-like adjustment body (12) of defined geometry, having at least one defined deformation (14, 16) along the inner circumference,
• measuring the inner surface of the adjustment body (12) by means of the matrix sensor (20, 34, 40) inserted centrally into the interior thereof, wherein the electric phase angle of the respective eddy current sensor pairs (22, 36) is adapted whilst taking into account the known geometry of the adjustment body (12),
• creating a family of calibration curves taking into account the respective measured signal amplitude and the associated real radial distance (26) of the respective eddy current sensor pair (22, 36) from the inner wall, each having a calibration curve for each eddy current sensor pair (22, 36),
• measuring a pipe (32) to be checked by means of the matrix sensor (20, 34, 40) inserted centrally into the interior thereof at at least one measuring point (42, 44, 46, 48) and creating a raw dataset of the measurement data obtained which, for each eddy current sensor pair (22, 36) comprises an associated measured signal amplitude for each measuring point (42, 44, 46, 48),
• converting the measured signal amplitude of the raw dataset into geometric radial distances (26) from the inner wall by using the family of calibration curves, wherein, by using the signal amplitudes for each sensor pair that occur during the checking of the pipe, a correspondingly pre-calibrated value from the family of calibration curves is used for each measuring point,
• providing a geometric dataset by using the radial distances determined for the visual representation of the inner surface of the pipe (32) to be checked.

2. Method for determining the geometry of tubular components according to Claim 1, **characterized in that** the adjustment body (12) has three constrictions in the region of about 0.8%, 1.6% and 2.4% of the pipe internal diameter.

3. Method for determining the geometry of tubular components according to Claim 1 or 2, **characterized in that** the matrix sensor (20, 34, 40) is displaced within the pipe (32) to be checked to a plurality of measuring points (42, 44, 46, 48) located along a sensor axis (38), and a measurement is carried out in each case at each measuring point (42, 44, 46, 48).

4. Method for determining the geometry of tubular components according to Claim 3, **characterized in that**, in the event of a local deformation (14, 16), a displacement of the sensor axis (38) relative to the pipe axis is compensated for during the creation of the geometric dataset by using changes occurring along the sensor axis (38).

5. Method for determining the geometry of tubular components according to Claim 3 or 4, **characterized in that** a deviation of the positioning of the matrix sensor (20, 34, 40) from the ideal central position is compensated **in that** opposing radial distance changes of opposite eddy current sensor pairs (24) at adjacent measuring points (42, 44, 46, 48) are compensated for during the creation of the geometric dataset.

6. Method for determining the geometry of tubular components according to one of the preceding claims, **characterized in that** the geometric dataset provided is visualized in the form of a graphic representation on a display device.

7. Method for determining the geometry of tubular components according to Claim 6, **characterized in that** the representation is three-dimensional.

## Revendications

1. Procédé de détermination de la géométrie de conduites en utilisant un capteur matriciel (20, 34, 40) sur la circonférence arrondie duquel une pluralité de paires de capteurs de courant de Foucault (22, 36) est disposée, comprenant les étapes suivantes :
- la mise à disposition d'un corps d'ajustage tubulaire métallique (12) à géométrie définie avec au moins une déformation définie (14, 16) le long de la circonférence intérieure,
- la mesure de la surface intérieure du corps d'ajustage (12) au moyen du capteur matriciel (20, 34, 40) introduit de manière centrée dans l'espace intérieur de celui-ci, dans lequel la position de phase électrique des paires respectives de capteurs de courant de Foucault (22, 36) est adaptée en tenant compte de la géométrie connue du corps d'ajustage (12),
- l'établissement d'une famille de courbes d'étalonnage tenant compte de l'amplitude de signal de mesure respective et de la distance radiale réelle (26) associée de la paire respective de capteurs de courant de Foucault (22, 36) par rapport à la paroi intérieure avec respectivement une courbe d'étalonnage pour chaque paire de capteurs de courant de Foucault (22, 36),
- la mesure d'une conduite (32) à vérifier au moyen du capteur matriciel (20, 34, 40) introduit de manière centrée dans l'espace intérieur de celle-ci au niveau d'au moins un point de mesure (42, 44, 46, 48) et l'établissement d'un jeu de données brutes des données de mesure obtenues, lequel comprend pour chaque paire de capteurs de courant de Foucault (22, 36), par point de mesure (42, 44, 46, 48), une amplitude de signal de mesure associée,
- la conversion des amplitudes de signal de mesure du jeu de données brutes en distances radiales géométriques (26) par rapport à la paroi intérieure en utilisant la famille de courbes d'étalonnage, dans lequel, à l'aide des amplitudes de signal apparaissant pendant la vérification de la conduite pour chaque paire de capteurs, par point de mesure, on utilise une valeur pré-étalonnée de manière correspondante de la famille de courbes d'étalonnage,
- la mise à disposition d'un jeu de données géométriques en utilisant les distances radiales déterminées pour la représentation visuelle de la surface intérieure de la conduite (32) à vérifier.

2. Procédé de détermination de la géométrie de conduites selon la revendication 1, **caractérisé en ce que** le corps d'ajustage (12) présente trois rétrécissements dans la plage de près de 0,8%, 1,6% et 2,4% du diamètre intérieur de conduite.

3. Procédé de détermination de la géométrie de conduites selon la revendication 1 ou 2, **caractérisé en ce que** le capteur matriciel (20, 34, 40) à l'intérieur de la conduite (32) à vérifier est déplacé vers plusieurs points de mesure (42, 44, 46, 48) se trouvant le long d'un axe de capteur (38) et respectivement une mesure est réalisée à chaque point de mesure (42, 44, 46, 48).

4. Procédé de détermination de la géométrie de conduites selon la revendication 3, **caractérisé en ce qu'**en cas d'une déformation locale (14, 16), un déplacement de l'axe de capteur (38) par rapport à l'axe de conduite lors de l'établissement du jeu de données géométriques est compensé à l'aide de modifications apparaissant le long de l'axe de capteur (38).

5. Procédé de détermination de la géométrie de conduites selon la revendication 3 ou 4, **caractérisé en ce qu'**une divergence du positionnement du capteur matriciel (20, 34, 40) par rapport à la position centrée idéale est compensée **en ce que** des modifications de distances radiales opposées de paires de capteurs de courant de Foucault (24) situées en vis-à-vis sont compensées au niveau de points de mesure (42, 44, 46, 48) voisins lors de l'établissement du jeu de données géométriques.

6. Procédé de détermination de la géométrie de conduites selon l'une des revendications précédentes, **caractérisé en ce que** le jeu de données géométriques mis à disposition est visualisé sous la forme d'une représentation graphique sur un dispositif d'affichage.

7. Procédé de détermination de la géométrie de conduites selon la revendication 6, **caractérisé en ce que** la représentation est tridimensionnelle.
